# EUROPEAN PATENT APPLICATION

(11) **EP 4 659 948 A1**
(43) Date of publication of application: **10.12.2025**
(21) Application number: 24180331.1
(22) Date of filing: 05.06.2024
(51) Int. Cl.: B32B 1/08, B32B 7/12, B32B 27/08, B32B 27/18, B32B 27/30, B32B 27/32

(54) **AN UNDERFLOOR HEATING PIPE**

(71) Applicant: Ambiente Systems Limited, Hatfield Hertfordshire AL9 6DE (GB)
(72) Inventor: Cooper, Gregory Damien, Brookmans Park, AL9 6DE (GB); Cooper, Sheldon, Brookmans Park, AL9 6DE (GB)
(74) Representative: Hanson, Kevin

(57) **Abstract**

An underfloor heating pipe (10) having a tubular pipe inner layer (14), a first adhesive layer (16), an oxygen-barrier layer (18), a second adhesive layer (20) and an outer layer (22). The first adhesive layer (16) and the second adhesive layer (20) each have a thickness in the range of 0.048 mm to 0.072 mm, the first and second adhesive layers (20) being formed from an adhesive and a colourant wherein a percentage of the colourant in each of the first and second adhesive layers (20) is up to 10% by weight. The oxygen-barrier layer (18) has a thickness in the range of 0.048 mm to 0.072 mm. The outer layer (22) has a thickness in the range of 0.24 mm to 0.36 mm.

## Description

The present invention relates to an underfloor heating pipe and a method of forming the said underfloor heating pipe.

Underfloor heating pipes are sturdy pipes designed to withstand the pressure of heated fluid held within the said pipe. A sturdy pipe may be formed of a thick pipe wall, however a thick pipe wall may result in a challenging installation as the pipe is difficult to bend. A large area of the floor may therefore not benefit from heat provided by the underfloor heating pipe as a larger area of the floor will not be in contact with the underfloor heating pipe as the pipe may not be installable in tight bends. Furthermore, when a rigid pipe is forced into a tight bend, the pipe may fold or kink easily which may result in a damaged pipe or will prevent the heated water from flowing throughout the length of the pipe.

If the pipe wall is thinner to allow for generally easier deformation, the pipe may not be able to withstand the fluid pressure therein, and may be squashed upon placement of tiles thereon. A thin pipe may therefore be more susceptible to damage as screed and flooring is applied, resulting in leakage of the heated fluid from the pipe and into the surrounding screed and/or flooring.

It is an object of the present invention to reduce or substantially obviate the aforementioned problems.

According to a first aspect of the invention, there is provided an underfloor heating pipe comprising: a tubular pipe inner layer; a first adhesive layer having a thickness in the range of 0.048 mm to 0.072 mm, the first adhesive layer being formed from an adhesive and a colourant wherein a percentage of the colourant in the first adhesive layer is up to 10% by weight; an oxygen-barrier layer connected to the tubular pipe inner layer via the first adhesive layer, the oxygen-barrier layer having a thickness in the range of 0.048 mm to 0.072 mm; a second adhesive layer having a thickness in the range of 0.048 mm to 0.072 mm, the second adhesive layer being formed from an adhesive and a colourant wherein a percentage of the colourant in the second adhesive layer is up to 10% by weight; and an outer layer connected to the oxygen-barrier layer via the second adhesive layer, the outer layer having a thickness in the range of 0.24 mm to 0.36 mm.

The combination of the layers of the underfloor heating pipe provides a sturdy, watertight pipe for use in underfloor heating. The combined effect of the thickness of the layers and up to 10% by weight of the colourant in each of the first and second adhesives results in a surprisingly flexible underfloor heating pipe. The underfloor heating pipe can then be placed by the installer into a tight serpentine configuration such that a large area of the floor can receive heat from the heated fluid. The underfloor heating pipe has an unexpectedly increased flexibility with respect to existing underfloor heating pipes known in the art.

Preferably, the percentage of the colourant in the first adhesive layer is in the range of 1% to 9% by weight. Optionally, the percentage of the colourant in the first adhesive layer may be in the range of 1% to 7% by weight. Preferably, the percentage of the colourant in the first adhesive layer is in the range of 1% to 5% by weight. Advantageously, the percentage of the colourant in the first adhesive layer may be in the range of 2% to 3% by weight.

Preferably, the percentage of the colourant in the second adhesive layer is in the range of 1% to 9% by weight. Optionally, the percentage of the colourant in the second adhesive layer may be in the range of 1% to 7% by weight. Preferably, the percentage of the colourant in the second adhesive layer is in the range of 1% to 5% by weight. Advantageously, the percentage of the colourant in the second adhesive layer may be in the range of 2% to 3% by weight.

The percentage of the colourant added to the first and second adhesive layers changes the flexibility of the pipe and thus allows the manufacturer to manufacture pipes with varying flexibility.

Preferably, a maximum deformation force applied to the underfloor heating pipe for achieving a deformation of 60mm is less than 100N. The underfloor heating pipe is deformable under a minimal pressure able to be easily applied by the installer so that the underfloor heating pipe can be bent into position easily.

Optionally, the tubular pipe inner layer may have a thickness in the range of 1.2 mm to 1.8 mm.

Beneficially, the tubular pipe inner layer may be formed of a polymer. Preferably, the polymer is polyethylene of a raised temperature (PE-RT). As an alternative, the polymer may be polybutylene. Preferably, the polymer is polyethylene. Optionally, the polymer may be polybutene. Resin-based polymers such as PE-RT produce low cost and effective plumbing pipes, without the risk of heavy metal leaching associated with traditional metal pipes. The pipes are also flexible, which improves the ease of installation, given that the pipes need to be installed in a serpentine, spiral or snail configuration, as standard.

Advantageously, the oxygen-barrier layer may be formed from ethylene-vinyl alcohol copolymer (EVOH). Thermoplastic materials, such as EVOH, provide excellent gas-barrier properties which are able to prevent ingress of oxygen into the inner pipe layer, which might otherwise result in corrosion or development of contaminants.

Optionally, the outer layer may be formed of a polymer. Preferably, the polymer is polyethylene of a raised temperature (PE-RT). As an alternative, the polymer may be polybutylene. Preferably, the polymer is polyethylene. Optionally, the polymer may be polybutene. Outer protective layers help to protect the oxygen-barrier layer, and help to limit accidental damage. If the material used is the same or similar to that as the tubular pipe inner layer, then the material properties will be identical or similar, which will assist with the flexibility and resilience of the pipe.

According to a second aspect of the invention, there is provided a method of forming an underfloor heating pipe the method comprising the step of: co- extruding a pipe having a plurality of layers, wherein the layers are: a tubular pipe inner layer; a first adhesive layer having a thickness in the range of 0.048 mm to 0.072 mm, the first adhesive layer being formed from an adhesive and a colourant wherein a percentage of the colourant in the first adhesive layer is up to 10% by weight; an oxygen-barrier layer connected to the tubular pipe inner layer via the first adhesive layer, the oxygen-barrier layer having a thickness in the range of 0.048 mm to 0.072 mm; a second adhesive layer having a thickness in the range of 0.048 mm to 0.072 mm, the second adhesive layer being formed from an adhesive and a colourant wherein a percentage of the colourant in the second adhesive layer is up to 10% by weight; and an outer layer connected to the oxygen-barrier layer via the second adhesive layer, the outer layer having a thickness in the range of 0.24 mm to 0.36 mm.

In order to form the multiple layer underfloor heating pipe, a specific sequence of layering must be considered in order to form the structure of the underfloor heating pipe. The co-extrusion of the layers to form the underfloor heating pipe allows the manufacturer to measure and extrude the desired thickness of both the layers and the overall underfloor heating pipe in a controlled and accurate manner.

For a better understanding of the present invention, and to show more clearly how it may be carried into effect, reference will now be made by way of example only to the accompanying drawings, in which:
Figure 1 shows a perspective view of an underfloor heating pipe in accordance with the first aspect of the invention, the underfloor heating pipe being shown in cross section;
Figure 2 is a cross sectional view of the underfloor heating pipe of Figure 1; and

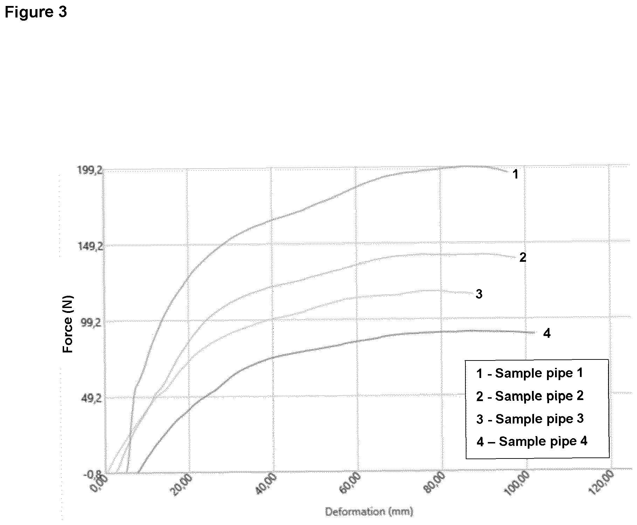

Figure 3 is a graph of deformation of four sample pipes depending on the force applied to the pipes.

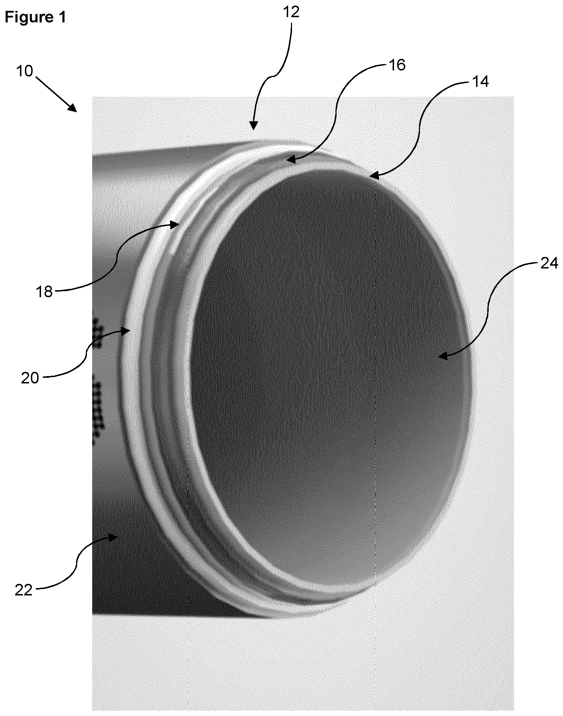

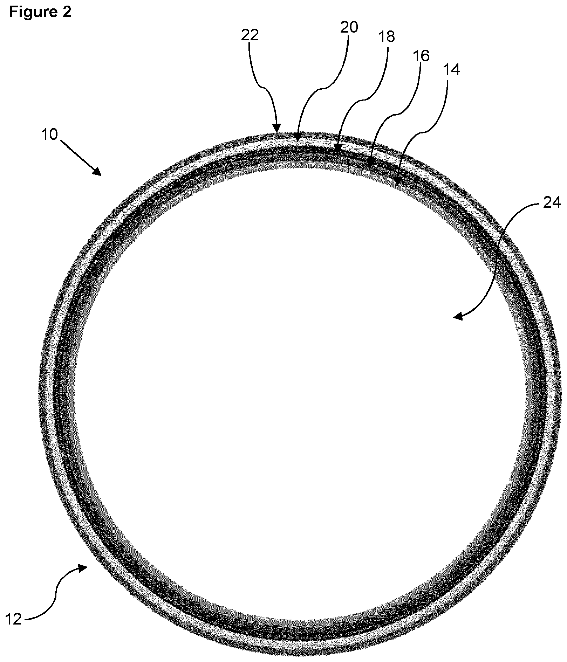

Referring firstly to Figures 1 and 2, there is provided an exemplary embodiment of an underfloor heating pipe 10 having a pipe wall 12 which includes a tubular pipe inner layer 14, a first adhesive layer 16, an oxygen-barrier layer 18, a second adhesive layer 20 and an outer layer 22.

It is shown in Figures 1 and 2 that the first adhesive layer 16 is located between the tubular pipe inner layer 14 and the oxygen-barrier layer 18, and the second adhesive layer 20 is between the oxygen-barrier layer 18 and the outer layer 22.

Each of the layers of the underfloor heating pipe 10 have a uniform wall thickness along a length of each of the layers. Each of the layers of the underfloor heating pipe 10 have different colours such that the layers are distinguishable from each other.

The tubular pipe inner layer 14 is preferably made of a polymer. The polymer is preferably a resin material such as polyethylene of a raised temperature (PE-RT). The polymer could also be polyethylene, polybutene or polybutylene. The tubular pipe inner layer 14 is shown as being colourless, although it is feasible that it may be coloured. The tubular pipe inner layer 14 preferably has a thickness in the range of 1 mm to 2 mm. More preferably, the tubular pipe inner layer 14 may have a thickness in the range of 1.2 mm to 1.8 mm. It is feasible that the tubular pipe inner layer 14 may have a thickness in the range of 1.3mm to 1.7mm. The tubular pipe inner layer 14 may have a thickness in the range of 1.4mm to 1.6mm. The tubular pipe inner layer 14 preferably has a thickness of 1.52mm. The specific thickness of the tubular pipe inner layer 14 allows the underfloor heating pipe 10 to bend sufficiently so that the underfloor heating pipe 10 can be arranged in a serpentine or undulating configuration.

The tubular pipe inner layer 14 is preferably oxygen-permeable. An internal channel 24 is formed by the tubular pipe inner layer 14, through which heated water or other heated fluid can in-use pass to provide heat to the user's floor. The internal channel 24 may also be referred to as a conduit.

The first adhesive layer 16 surrounds the tubular pipe inner layer 14. The first adhesive layer 16 preferably has a thickness in the range of 0.05mm and 0.1mm. More preferably, the first adhesive layer 16 has a thickness in the range of 0.048mm and 0.072mm. The first adhesive layer 16 may have a thickness in the range of 0.054mm and 0.066mm. The first adhesive layer 16 preferably has a thickness of 0.06mm. The specific thickness of the first adhesive layer 16 allows the underfloor heating pipe 10 to bend sufficiently so that the underfloor heating pipe 10 can be arranged in a serpentine or undulating configuration.

The first adhesive layer 16 is formed from an adhesive and a colourant. The adhesive causes the tubular pipe inner layer 14 and the oxygen-barrier layer 18 to adhere to one another. The adhesive used in the present embodiment is a grafted polymer adhesive. It is feasible that other suitable industrial adhesives can be used.

The colourant may be a pigment, dye or ink and therefore may be a liquid colourant or a solid colourant. It is preferable in the present embodiment that the colourant is solid and mixed in with the adhesive of the first adhesive layer 16 before the adhesive is used in the production of the underfloor heating pipe 10. The colourant of the first adhesive layer 16 is red as shown in Figures 1 and 2, although any other colour may be envisaged.

The percentage of the colourant in the first adhesive layer 16 is preferably up to 10% by weight. The percentage of the colourant in the first adhesive layer 16 may be in the range of 1% to 9% by weight. The percentage of the colourant in the first adhesive layer 16 may be in the range of 1% to 7% by weight. The percentage of the colourant in the first adhesive layer 16 may be in the range of 1% to 5% by weight. The percentage of the colourant in the first adhesive layer 16 may be in the range of 2% to 3% by weight. The colourant provides the underfloor heating pipe 10 with the unexpected characteristic of increased flexibility in combination with the thickness of the layers of the underfloor heating pipe 10. This flexibility allows the underfloor heating pipe 10 to be arranged in a serpentine or undulating configuration.

The oxygen-barrier layer 18 surrounds the tubular pipe inner layer 14 and is adhesively connected to the tubular pipe inner layer 14 via the first adhesive layer 16. The oxygen-barrier layer 18 is shown as being colourless, although it is feasible that it may be coloured. The oxygen-barrier layer 18, or other similarly gas-impermeable membrane, is formed from ethylene-vinyl alcohol copolymer (EVOH). The oxygen-barrier layer 18 preferably has a thickness in the range of 0.05mm and 0.1 mm. More preferably, the oxygen-barrier layer 18 has a thickness in the range of 0.048mm and 0.072mm. The oxygen-barrier layer 18 may have a thickness in the range of 0.054mm and 0.066mm. The oxygen-barrier layer 18 preferably has a thickness of 0.06mm. The specific thickness of the oxygen-barrier layer 18 allows the underfloor heating pipe 10 to bend sufficiently so that the underfloor heating pipe 10 can be arranged in a serpentine or undulating configuration.

The second adhesive layer 20 surrounds the oxygen-barrier layer 18. The second adhesive layer 20 preferably has a thickness in the range of 0.05mm and 0.1mm. More preferably, the second adhesive layer 20 has a thickness in the range of 0.048mm and 0.072mm. The second adhesive layer 20 may have a thickness in the range of 0.054mm and 0.066mm. The second adhesive layer 20 preferably has a thickness of 0.06mm. The specific thickness of the second adhesive layer 20 allows the underfloor heating pipe 10 to bend sufficiently so that the underfloor heating pipe 10 can be arranged in a serpentine or undulating configuration.

The second adhesive layer 20 is formed from an adhesive and a colourant. The adhesive causes the oxygen-barrier layer 18 and the outer layer 22 to adhere to one another. The adhesive used in the present embodiment is a grafted polymer adhesive. It is feasible that other suitable industrial adhesives can be used.

The colourant may be a pigment, dye or ink and therefore may be a liquid colourant or a solid colourant. It is preferable in the present embodiment that the colourant is solid and mixed in with the adhesive of the second adhesive layer 20 before the adhesive is used in the production of the underfloor heating pipe 10. The colourant of the second adhesive layer 20 is white as shown in Figures 1 and 2, although any other colour may be envisaged.

The percentage of the colourant in the second adhesive layer 20 may be up to 10% by weight. The percentage of the colourant in the second adhesive layer 20 may be in the range of 1% to 9% by weight. The percentage of the colourant in the second adhesive layer 20 may be in the range of 1% to 7% by weight. The percentage of the colourant in the second adhesive layer 20 may be in the range of 1% to 5% by weight. The percentage of the colourant in the second adhesive layer 20 may be in the range of 2% to 3% by weight. The colourant provides the underfloor heating pipe 10 with the unexpected characteristic of increased flexibility in combination with the thickness of the layers of the underfloor heating pipe 10. This flexibility allows the underfloor heating pipe 10 to be arranged in a serpentine or undulating configuration.

It may be feasible that the underfloor heating pipe 10 only has one of the first or second adhesive layers 16, 20. However, to ensure the layers of the underfloor heating pipe 10 are suitably adhered to one another, it is preferable that both the first and second adhesive layers 16, 20 are present.

The outer layer 22 surrounds and protects the oxygen-barrier layer 18 and is adhesively connected to the oxygen-barrier layer 18 via the second adhesive layer 20. Only a singular outer layer 22 is shown in Figures 1 and 2 but it is feasible that there may be additional outer layers 22 to provide further protection to the oxygen-barrier layer 18 and to prevent the underfloor heating pipe 10 from being damaged.

The outer layer 22 is formed of a polymer. The polymer is preferably polyethylene of a raised temperature (PE-RT). The polymer could also be polyethylene, polybutene or polybutylene. The outer layer 22 is shown as being green, although any other colour may be envisaged. The outer layer 22 preferably has a thickness of at least 0.2mm. The outer layer 22 may have a thickness in the range of 0.2mm and 0.4mm. More preferably, the outer layer 22 has a thickness in the range of 0.24mm to 0.36mm. The outer layer 22 may have a thickness in the range of 0.27mm to 0.33mm. The outer layer 22 preferably has a thickness of 0.3mm. The specific thickness of the outer layer 22 allows the underfloor heating pipe 10 to bend sufficiently so that the underfloor heating pipe 10 can be arranged in a serpentine or undulating configuration.

The underfloor heating pipe 10 may have a diameter in the range of 10mm to 32mm. In an exemplary embodiment, the underfloor heating pipe 10 has a diameter of 16.15mm.

**Table 1**

| **Sample pipe** | **Diameter of pipe (mm)** | **Thickness of pipe wall (mm)** | **Deformation (mm)** | **Force applied (N)** |
|---|---|---|---|---|
| 1 | 16.15 | 2.15 | 60 | 183.3 |
| 2 | 16.15 | 2.15 | 60 | 134.4 |
| 3 | 16.15 | 2.15 | 60 | 112.8 |
| 4 | 16.15 | 2.15 | 60 | 83.3 |

In the exemplary embodiment of the present invention as shown in Figures 1 and 2, also referred to as sample pipe 4, the tubular pipe inner layer 14 is formed of polyethylene of a raised temperature (PE-RT) and has a thickness of 1.52mm, the first adhesive layer 16 has a thickness of 0.06mm and a percentage of the colourant in the range of 2% to 3% by weight, the oxygen-barrier layer 18 has a thickness of 0.06mm, the second adhesive layer 20 has a thickness of 0.06mm and a percentage of the colourant in the range of 2% to 3% by weight and the outer layer 22 is formed of polyethylene of a raised temperature (PE-RT) and has a thickness of 0.3mm. In the exemplary embodiment, the adhesive is a grafted polymer adhesive.

Polyethylene of a raised temperature (PE-RT) in the exemplary embodiment is also referred to as PE-RT Type 0.

The combination of the thickness of each of the layers and the percentage weight of the colourant in the adhesive layers of sample pipe 4 preferably allows the pipe to achieve a deformation of 60mm when a maximum deformation force of less than 100N is applied. In the table above, the maximum deformation force is 83.3N. Sample pipe 4 is therefore unexpectedly flexible due to the combination of the thicknesses of the layers and the percentage of colourant in the adhesive layers.

Table 1 outlines experimental data of the deformation under force of four sample pipes with different compositions during a press bending process, where sample pipe 4 has the composition of the exemplary embodiment of the present invention.

Sample pipes 1, 2 and 3 are shown to require a larger force to be deformed to 60mm.

Sample pipe 1 comprises an aluminium layer between two PE-RT layers. An adhesive bonds the aluminium layer to the PE-RT layers. The adhesive lacks colourant and is thus colourless.

Sample pipe 2 comprises five layers, which are ordered as follows: PE-RT Type 2, then an adhesive, an oxygen-barrier layer (EVOH), an adhesive and PE-RT Type 2. PE-RT Type 2 is a type of PE-RT which is harder than PE-RT Type 1 in sample pipe 3. The adhesive lacks colourant and is thus colourless.

Sample pipe 3 has five layers, which are ordered as follows: PE-RT Type 1, then an adhesive, an oxygen-barrier layer (EVOH), an adhesive and PE-RT Type 1. PE-RT Type 1 is a type of PE-RT which is harder than Type 0 of sample pipe 4. The adhesive lacks colourant and is thus colourless.

Sample pipes 2 and 3 therefore have the same layer structure of sample pipe 4. The pipes differ in the type of PE-RT used, the layer thickness and the fact that the sample pipes 1, 2 and 3 lack colourant in the adhesion layers. In the experiment, the pipe is placed between two counter rollers, and a ram, having a shaped ram head, of the press bending system pushed down onto the pipe which applies a force. The ram head is a semi-circular element which is preferably made of metal. The pipe then bends to the profile of the ram head and the counter rollers as the pipe is clamped therebetween. Each pipe of the experiment therefore forms the same curved shape when bent.

The ram head has a bend profile which can be defined as the shape of the profile of the ram head of the pipe bending system. The ram head has a semi-circular cross section. The length of the curved end of the ram head is 94.56mm, i.e. the length of the arc of the semi-circle.

The deformation is defined as the distance the pipe has travelled when a force is applied. For example, as the force is applied, an unbent pipe begins to bend to a maximum deformation of 60mm. The distance travelled is measured from the unbent horizontal position to a maximum peak of the bent pipe in the axis of the ram under the influence of the force applied by the semi-circular ram head.

The force applied is defined as the force applied to the pipe by the ram head, which results in the bending of the pipe to the bent position.

For example, sample pipe 4 deforms by 60mm utilising a force of 83.3N. Therefore, sample pipe 4 is highly flexible which is a result of the specific composition of the underfloor heating pipe 10.

Sample pipes 1, 2 and 3 all require a larger force to be applied in order to achieve the deformation of 60mm. These pipes are less flexible due to the fact that they do not have the specific thicknesses of the layers of sample pipe 4 and do not have the same percentage colourant in the adhesive of sample pipe 4. Sample pipes 1, 2 and 3 instead are formed of much more rigid materials.

The underfloor heating pipe 10 is formed by co-extruding a pipe, the pipe having layers in the order as disclosed above. The underfloor heating pipe 10 is therefore formed directly from extrusion. The extruded underfloor heating pipe 10 preferably has a total wall thickness in the range of 1.7 mm to 2.6 mm. The underfloor heating pipe 10 preferably has a wall thickness of up to 2.15mm. It is feasible that the wall thickness is in a range of 1mm to 2.15mm.

A plurality of underfloor heating pipes 10 may be installed in a serpentine, spiral or snail configuration underneath a floor covering, the underfloor heating pipes 10 being mounted or connected to a pipe mounting plate to form an underfloor heating system. The pipe mounting plate preferably includes a plate which is receivable under the floor covering and which has a plurality of upstanding nubs or receivers in an alternating pattern to allow for the underfloor heating pipes 10 to be wound therearound or received therein. Generally, a protective layer such as screed is then placed over the underfloor heating pipes 10 to prevent damage to the said pipes. The floor covering is then placed on top of the screed.

The underfloor heating pipes 10 of the present invention can therefore be installed in much the same manner as known in the art, whilst having the aforementioned advantages associated with the surprising increased flexibility of the pipes which are not available in the art.

It is therefore possible to provide an underfloor heating pipe which has a suitable thickness to withstand fluid pressure and also be flexible enough to allow the pipe to be manipulated into desired positions for installation of underfloor heating.

The embodiments described above are provided by way of example only, and various changes and modifications will be apparent to persons skilled in the art without departing from the scope of the present invention as defined by the appended claims. The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. An underfloor heating pipe (10) comprising:
a tubular pipe inner layer (14);
a first adhesive layer (16) having a thickness in the range of 0.048 mm to 0.072 mm, the first adhesive layer (16) being formed from an adhesive and a colourant wherein a percentage of the colourant in the first adhesive layer (16) is up to 10% by weight;
an oxygen-barrier layer (18) connected to the tubular pipe inner layer (14) via the first adhesive layer (16), the oxygen-barrier layer (18) having a thickness in the range of 0.048 mm to 0.072 mm;
a second adhesive layer (20) having a thickness in the range of 0.048 mm to 0.072 mm, the second adhesive layer (20) being formed from an adhesive and a colourant wherein a percentage of the colourant in the second adhesive layer (20) is up to 10% by weight; and
an outer layer (22) connected to the oxygen-barrier layer (18) via the second adhesive layer (20), the outer layer (22) having a thickness in the range of 0.24 mm to 0.36 mm.

2. An underfloor heating pipe (10) as claimed in claim 1, wherein the percentage of the colourant in the first adhesive layer (16) is in the range of 1% to 9% by weight.

3. An underfloor heating pipe (10) as claimed in claim 2, wherein the percentage of the colourant in the first adhesive layer (16) is in the range of 1% to 7% by weight.

4. An underfloor heating pipe (10) as claimed in claim 3, wherein the percentage of the colourant in the first adhesive layer (16) is in the range of 1% to 5% by weight.

5. An underfloor heating pipe (10) as claimed in claim 4, wherein the percentage of the colourant in the first adhesive layer (16) is in the range of 2% to 3% by weight.

6. An underfloor heating pipe (10) as claimed in any one of the preceding claims, wherein the percentage of the colourant in the second adhesive layer (20) is in the range of 1% to 9% by weight.

7. An underfloor heating pipe (10) as claimed in claim 6, wherein the percentage of the colourant in the second adhesive layer (20) is in the range of 1% to 7% by weight.

8. An underfloor heating pipe (10) as claimed in claim 7, wherein the percentage of the colourant in the second adhesive layer (20) is in the range of 1% to 5% by weight.

9. An underfloor heating pipe (10) as claimed in claim 8, wherein the percentage of the colourant in the second adhesive layer (20) is in the range of 2% to 3% by weight.

10. An underfloor heating pipe (10) as claimed in any one of the preceding claims, wherein a maximum deformation force applied to the underfloor heating pipe (10) for achieving a deformation of 60mm is less than 100N.

11. An underfloor heating pipe (10) as claimed in any one of the preceding claims, wherein the tubular pipe inner layer (14) has a thickness in the range of 1.2 mm to 1.8 mm.

12. An underfloor heating pipe (10) as claimed in any one of the preceding claims, wherein the tubular pipe inner layer (14) is formed of a polymer.

13. An underfloor heating pipe (10) as claimed in any one of the preceding claims, wherein the oxygen-barrier layer (18) is formed from ethylene-vinyl alcohol copolymer (EVOH).

14. An underfloor heating pipe (10) as claimed in any one of the preceding claims, wherein the outer layer (22) is formed of a polymer.

15. A method of forming an underfloor heating pipe (10), the method comprising the step of:
co-extruding a pipe having a plurality of layers, wherein the layers are:
a tubular pipe inner layer (14);
a first adhesive layer (16) having a thickness in the range of 0.048 mm to 0.072 mm, the first adhesive layer (16) being formed from an adhesive and a colourant wherein a percentage of the colourant in the first adhesive layer (16) is up to 10% by weight;
an oxygen-barrier layer (18) connected to the tubular pipe inner layer (14) via the first adhesive layer (16), the oxygen-barrier layer (18) having a thickness in the range of 0.048 mm to 0.072 mm;
a second adhesive layer (20) having a thickness in the range of 0.048 mm to 0.072 mm, the second adhesive layer (20) being formed from an adhesive and a colourant wherein a percentage of the colourant in the second adhesive layer (20) is up to 10% by weight; and
an outer layer (22) connected to the oxygen-barrier layer (18) via the second adhesive layer (20), the outer layer (22) having a thickness in the range of 0.24 mm to 0.36 mm.
